# EUROPEAN PATENT SPECIFICATION

(11) **EP 0 516 882 B1**
(45) Date of publication and mention of the grant of the patent: **19.10.1994**
(21) Application number: 91121018.5
(22) Date of filing: 07.12.1991
(51) Int. Cl.: A47J 36/06, A47J 43/28

(54) **Multi-purpose kitchen utensil**
Mehrzweck-Küchengeschirr
Ustensile de cuisine à usage multiple

(30) Priority: 03.06.1991 IT GE910077
(43) Date of publication of application: 09.12.1992
(73) Proprietor: AETERNUM S.r.l., I-25067 Lumezzane Sant'Apollonio, Brescia (IT)
(72) Inventor: Bozzini, Francesco, I-16162 Genova (IT)
(74) Representative: Ferrarotti, Giovanni

(56) References cited:
- DE-A- 2 900 476
- FR-A- 2 392 644
- GB-A- 873 878
- US-A- 3 007 595
- US-A- 4 917 262

## Description

At present there are no kitchen utensils really suitable for turning the food in pans and pots etc.. To turn over an omelette, pancake, crêpe and so on is always a laborious job with the risk to spoil the food. Nor is it easy to remove cakes, tarts and the like from their mould or container. We have to use make-shifts and we may drop the cake or burn our fingers in the process. Today it is far from easy to transfer fried food from the frying pan to the dish, especially if we have to drain-off the oil and separate it from the fried food.

This invention has the aim to eliminate and make up for these shortcomings by providing a multi-purpose utensil which will facilitate moving and turning the food in the pan or pot, to remove the food from its container in the oven and to transfer fries from the frying pan into a dish while separating oil or sauce. This utensil can also be used as a normal cover.

This invention is laid down in claim 1. The present prior art is disclosed in GB-A-873, 878.

According to this invention, the utensil is cone-shaped and has a generally circular base, slightly larger than the opening at the top of the cookware, whether sauce-pans, frying-pans, pots, skillets, or casseroles, etc. in which the food is prepared. A short cylindrical wall, is extending peripherally along approximately one half of the cone-shaped base conference, in extension of the inner concave surface. A pouring spout is provided opposite to this cylindrical wall, recessed in the concave part of the cone. A handy grip is secured to the cusp of the cone and is externally provided with a protective covering.

According to this invention, this utensil can be used to cover the cookware and, by turning the utensil upside down (by 180°), it is also possible to transfer the food from its container to the utensil and then return the food to its container. The sauce, gravy or fat transferred into the cone-shaped body, may or may not be poured back through the spout into the container. To remove cakes or tarts from the oven, the utensil is placed on the mold, turning the device plus cake or tart over by 180° so that the latter will rest on the utensil and can be left resting on its grip on a table or console to cool down .

The invention in question is illustrated in its practical and exemplifying implementation in the enclosed drawings, in which:
**Fig.1** shows a lateral view of the utensil in question;
**Fig.2** shows the central vertical section of the utensil illustrated in Fig.1;
**Fig.3** shows a top view of the utensil illustrated in fig.1;
**Fig. 4, 5, and 6** show the exemplified utilization of the kitchen utensil to turn an omelette or similar food;
**Fig.7** shows an exemplified utilization of the utensil to cool down a cake;
**Fig.8** shows an exemplified application of the utensil to cover a cooking pot.

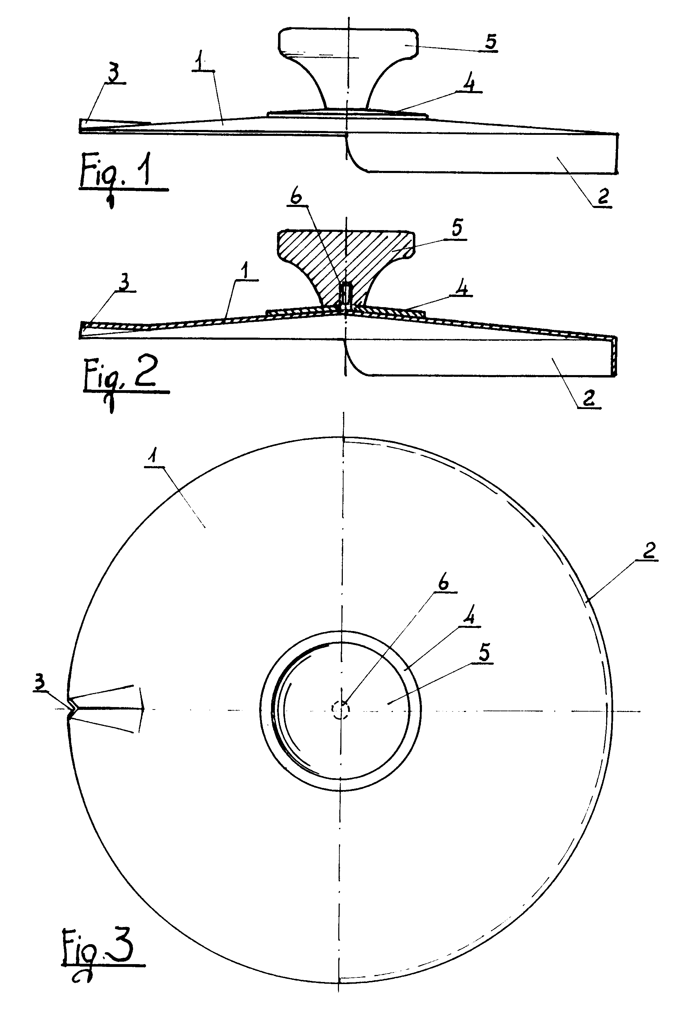

With reference to these figures, the utensil 1 has a low cone shape with a generally circular base; a short cylindrical section 2 (extending downward as shown in fig. 1 and 2) is fixed to approximately one half of the peripheral cone edge in extension of the inner concave surface of cone 1. Opposite this wall 2, the cone 1 is provided with a pouring spout 3 recessed in the cone.

The top of the cone 1 has a large covered area 4 to protect against scalds and burns, and a handy grip 5 with flat upper surface. The protective outer covering 4 and hand grip 5 may be secured to the cone 1 by screws 6 welded onto the cone, as shown in the drawings or by through screws; any other known system may also be used to attach this outer covering and grip.

The utensil in question is usually combined with pots, pans and other cookware and for this reason the cone base shall be slightly larger than the edge of the pot and/or pan so that the cylindrical wall 2 will remain external to the food container.

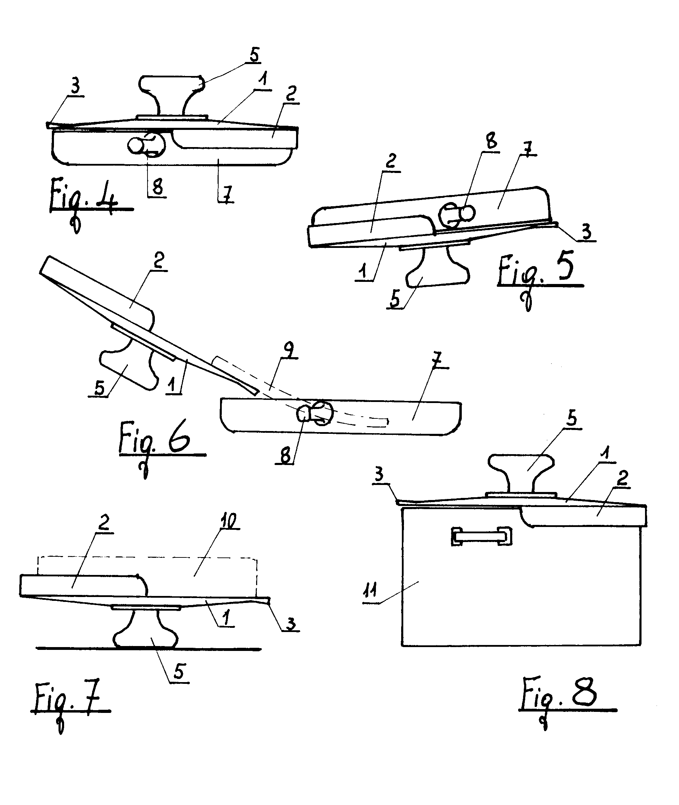

By its configuration, the utensil may be used for various kitchen purposes. Fig. 4, 5 and 6 show its use to turn an omelette or similar food; by placing the utensil 1 on the skillet 7 with handle 8 as shown in fig.4 it is possible to turn them together upside down (by 180 °) (keeping the grip 5 with one hand and the handle 8 with the other), transfer the turned omelette and its seasoning to the utensil as shown in fig.5; after the skillet 7 is replaced in its normal position as shown in fig.6, the omelette 9 is returned to its pan or skillet 7 while the oil or seasoning is poured back or drained off through the pouring spout 3.

During the second phase, it is recommended to keep the skillet-utensil assembly slightly inclined with the cylindrical portion 2 downward and the pouring spout 3 upwards, as shown in fig.5, so that the oil or seasoning remains inside the body of the cone 1 and the cylindrical wall 2.

The same process is followed to remove cakes, tarts and similar food from their mould; cakes may remain inside the utensil which is left standing on its grip 5 as shown in fig.5, to cool down.

Fig. 8 exemplifies the utilization of the cone shaped utensil 1 as a normal cover for the pot 11.

Obviously, the kitchen utensil subject matter of this invention may also be used for other purposes such as to cover dough or other mixes, as a support for raw and cooked vegetables etc.

It is clear that the utensil in question may have various sides according to the cookware it has to cover and the cone base, besides circular, may also be elliptic, oblong etc. according to the shape of the cookware.

The body of the utensil is usually in metal construction but any other suitable material, even plastic may be used since it won't get in touch with the flame. The protective covering 4 and hand grip are usually in plastic.

## Claims

1. Multi-purpose kitchen utensil consisting of a cone-shaped body (1) and a hand grip (5) with a large upper base fixed at the cusp of the cone (1), **characterized** by the fact that the cone-shaped body has a short cylindrical lateral wall (2) along approximately half of its base edge, on one side of this base edge, in extension of the internal concave inner surface of the cone, a pouring spout (3) recessed inside the cone (1) being located on the opposite side of the base, and in that the utensil has a protective external central covering (4) of a large area at the top of the cone (1) so that it will be possibile, with help of this utensil, to turn an omelette and similar food, to remove cakes from their mould and let them cool down, to protect food or dough end to use it as a normal cover for cookware.

2. Multi-purpose kitchen utensil as described in claim 1, **characterized** by the fact that the protective covering (4) and grip (5) are secured to the cone cusp (1) by welded or through screws (6) or by any other known fastening system.

3. Multi-purpose kitchen utensil as described in claim 1, **characterized** by the fact that the cone base, although usually circular shaped, may have any other configuration depending on the shape of the cookware (7, 11) to be combined with the cone (1).

4. Multi-purpose kitchen utensil as described in claim 1, **characterized** by the fact that the cone base (1) is larger sized than the outer size of the cookware (7, 11) so that the utensil will cover the cookware with its outer cylindrical wall (2).

## Patentansprüche

1. Vielzweck-Küchengerät, bestehend aus einem konusförmigen Körper (1) und einem Handgriff (5) mit einer großen oberen Grundfläche, welcher an der Spitze des Konus (1) befestigt ist, dadurch gekennzeichnet, daß der konusförmige Körper entlang ungefähr der Hälfte seiner Grundflächenkante auf einer Seite dieser Grundflächenkante in Verlängerung der inneren konkaven Innenfläche des Konus eine kurze zylindrische Seitenwand (2) aufweist und eine Ausgußtülle (3), welche in den Konus (1) eingelassen ist und auf der gegenüberliegenden Seite der Grundfläche angeordnet ist, aufweist, und daß das Küchengerät an der Spitze des Konus (1) einen äußeren mittleren Schutzüberzug (4) von großer Fläche aufweist, so daß es möglich sein wird, mit Hilfe dieses Küchengeräts eine Omelette und ähnliche Speisen Zu wenden, Kuchen ihrer Form zu entnehmen und sie auskühlen zu lassen, Speisen oder Teig zu schützen und es als normale Abdeckung für Kochgeschirr zu verwenden.

2. Vielzweck-Küchengerät nach Anspruch 1, dadurch gekennzeichnet, daß der Schutzüberzug (4) und der Griff (5) an der Konusspitze (1) durch geschweißte oder durchgehende Schrauben (6) oder durch jedwedes andere bekannte Befestigungssystem festgemacht sind.

3. Vielzweck-Küchengerät nach Anspruch 1, dadurch gekennzeichnet, daß die Konusgrundfläche, wenngleich sie für gewöhnlich kreisförmig ausgebildet ist, jedwede andere Konfiguration aufweisen kann, je nach der Form des Kochgeschirrs (7, 11), welches mit dem Konus (1) kombiniert werden soll.

4. Vielzweck-Küchengerät nach Anspruch 1, dadurch gekennzeichnet, daß die Konusgrundfläche (1) größer bemessen ist als die Außenmaße des Kochgeschirrs (7, 11), so daß das Küchengerät das Kochgeschirr mit seiner äußeren zylindrischen Wandung (2) abdeckt.

## Revendications

1. Ustensile ménager multifonctionnel composé d'un corps en forme de cône (1) et d'une poignée (5) avec une grande base supérieure fixée à la pointe du cône (1), **caractérisé** en ce que le corps en forme de cône présente, le long d'environ la moitié du bord de sa base, sur un côté du bord de sa base, en prolongation de la surface intérieure concave du cône, une paroi latérale cylindrique courte (2) et un bec verseur (3) intégré dans le cône (1) et agencé sur le côté opposé de la base, et que l'ustensile ménager présente à la pointe du cône (1) un recouvrement de protection moyen extérieur (4) de grande surface, de sorte qu'il sera possible de retourner, à l'aide de cet ustensile ménager, une omelette et d'autres aliments similaires, de retirer des gâteaux de leur moule et de les faire refroidir, de protéger des aliments ou de la pâte, et de l'utiliser comme couvercle normal pour les récipients de la batterie de cuisine.

2. Ustensile ménager multifonctionnel selon revendication 1, **caractérisé** en ce que le recouvrement de protection (4) et la poignée (5) sont fixés sur la pointe du cône (1) par des vis soudées ou des boulons traversants (6) ou par tout autre système de fixation connu.

3. Ustensile de cuisine multifonctionnel selon revendication 1, **caractérisé** en ce que la base du cône, même si elle est généralement conçue de façon circulaire, peut présenter n'importe quelle autre configuration, selon la forme du récipient de la batterie de cuisine (7, 11) devant être combiné avec le cône (1).

4. Ustensile de cuisine multifonctionnel selon revendication 1, **caractérisé** en ce que la base du cône (1) présente des dimensions plus grandes que les dimensions extérieures du récipient (7, 11), de sorte que l'ustensile ménager recouvre le récipient de sa paroi cylindrique extérieure (2).
